# EUROPEAN PATENT APPLICATION

(11) **EP 4 794 239 A1**
(43) Date of publication of application: **19.08.2026**
(21) Application number: 24884497.9
(22) Date of filing: 21.10.2024
(51) Int. Cl.: H04L 5/00

(54) **CONTROL INFORMATION TRANSMISSION METHOD AND COMMUNICATION APPARATUS**

(30) Priority: 30.10.2023 CN 202311428372
(71) Applicant: HUAWEI TECHNOLOGIES CO., LTD., Shenzhen 518129 (CN)
(72) Inventor: FAN, Qiang, Shenzhen, Guangdong 518129 (CN)
(74) Representative: Pfenning, Meinig & Partner mbB
(86) International application number: PCT/CN2024/126226
(87) International publication number: WO 2025/092493

(57) **Abstract**

This application discloses a control information transmission method and a communication apparatus. The method relates to the field of communication technologies. The method includes: receiving a first container that includes first-type control information at a first protocol layer; encapsulating the first container at the first protocol layer to obtain a first control packet of the first protocol layer; and sending the first control packet at the first protocol layer. The method reduces transmission delay of control information.

## Description

This application claims priority to Chinese Patent Application No. 202311428372.X, filed with the China National Intellectual Property Administration on October 30, 2023 and entitled "CONTROL INFORMATION TRANSMISSION METHOD AND COMMUNICATION APPARATUS", which is incorporated herein by reference in its entirety.

### TECHNICAL FIELD

This application relates to the field of communication technologies, and in particular, to a control information transmission method and a communication apparatus.

### BACKGROUND

A layered protocol stack design is used for a new radio (new radio, NR) air interface. Specifically, an NR user plane protocol stack includes a service data adaptation protocol (service data adaptation protocol, SDAP) layer, a packet data convergence protocol (packet data convergence protocol, PDCP) layer, a radio link control (radio link control, RLC) layer, a media access control (media access control, MAC) layer, and a physical layer. In this user plane protocol design, a transmitting end and a receiving end may exchange control information of a specific protocol layer, for example, control information of the PDCP layer. The control information is used to manage functions like variable updates, transmission/reception window adjustments, buffer updates, packet discarding, packet retransmission, status report delivery, and control information compression at that specific protocol layer. Upon receiving the control information, the receiving end performs corresponding processing based on the type of the control information.

However, when the PDCP layer sends either control information or data packets to the RLC layer, the RLC layer encapsulates them into RLC data protocol data units (data protocol data units, data PDUs) and then sends the RLC data protocol data units in the order received. This approach leads to significant transmission delay for control information. Therefore, how to reduce the transmission delay of control information is a pressing technical challenge that needs to be addressed.

### SUMMARY

Embodiments of this application provide a control information transmission method and a communication apparatus to reduce transmission delay of control information.

According to a first aspect, this application provides a control information transmission method. The method is applied to a user plane of a transmitting end. The method includes: receiving a first container at a first protocol layer, where the first container includes first-type control information; encapsulating the first container at the first protocol layer, to obtain a first control packet of the first protocol layer; and sending the first control packet at the first protocol layer.

Based on the method described in the first aspect, when receiving a first container from a second protocol layer, the first protocol layer encapsulates the first container into the first control packet of the first protocol layer. A priority of sending a control packet at the first protocol layer is higher than a priority of sending a data packet. This can shorten a delay of queuing control information of the second protocol layer at the first protocol layer for sending, thereby reducing the transmission delay of the control information. In addition, when the first protocol layer is a MAC layer and the second protocol layer is a PDCP layer, the PDCP layer delivers control information to the MAC layer in a cross-layer transmission manner. This can also reduce the transmission delay of the control information. A container may be used to carry various types of information. A protocol layer other than a protocol layer entity that generates the container at the transmitting end may not need to read or confirm content in the container. Therefore, in this method, using a container to carry control information helps reduce standardization efforts and protocol changes required for future extensions of new cross-layer signaling exchange, as well as complexity of product implementation. In comparison with a conventional approach of defining each cross-layer exchange signaling separately, this method offers greater scalability.

In a possible implementation, the first control packet includes indication information and the first container, and the indication information indicates that the first control packet is a control packet for delivering the first container.

In a possible implementation, a priority of sending the first control packet at the first protocol layer is higher than a priority of sending a data packet at the first protocol layer. Based on this implementation, the first control packet including the first container is preferentially sent, so that a delay of queuing the control information of the second protocol layer at the first protocol layer for sending is shortened, thereby reducing the transmission delay of the control information.

In a possible implementation, the method further includes: receiving a first container at the first protocol layer, where the first container includes second-type control information; encapsulating the first container at the first protocol layer to obtain a second control packet; and sending the second control packet at the first protocol layer. Based on this implementation, the second protocol layer may encapsulate different types of control information into first containers. In other words, the first-type control information and the second-type control information may be encapsulated into two first containers of a same format, and the two containers are then sent to the first protocol layer. The first protocol layer directly encapsulates the two first containers into the first control packet and the second control packet respectively without needing to read content in the first containers, where the first control packet and the second control packet are control packets of a same format. A container may be used to carry various types of information. A protocol layer other than a protocol layer entity that generates the container at the transmitting end may not need to read or confirm content in the container. Therefore, in this method, using a container to carry control information helps reduce standardization efforts and protocol changes required for future extensions of new cross-layer signaling exchange, as well as complexity of product implementation. In comparison with a conventional approach of defining each cross-layer exchange signaling separately, this method offers greater scalability.

In a possible implementation, the method further includes: generating the first container at the second protocol layer, where the first protocol layer is lower than the second protocol layer; and sending the first container to the first protocol layer through the second protocol layer.

In a possible implementation, when the second protocol layer is a packet data convergence protocol PDCP layer, the first protocol layer is a radio link control RLC layer or a media access control MAC layer; or when the second protocol layer is an RLC layer, the first protocol layer is a MAC layer.

In a possible implementation, when the first protocol layer is a MAC layer, the first control packet further includes a first field, and the first field indicates that the first container included in the first control packet is from the second protocol layer. Based on this manner, a receiving end can determine, based on the first field, that the first control packet needs to be delivered to the second protocol layer.

In a possible implementation, the first protocol layer is located in a distributed unit DU, and the second protocol layer is located in a central unit CU; and sending the first container to the first protocol layer through the second protocol layer may be specifically implemented as: sending a first data frame to the DU through the CU, where the first data frame includes the first container. Based on this implementation, this solution can be applied to a CU-DU separation scenario.

In a possible implementation, the first data frame includes a second field and a third field, the second field indicates that the first data frame is a data frame for delivering the first container, the second field further indicates that a transmission direction of the first data frame is from the CU to the DU, and the third field indicates that a protocol layer receiving the first data frame is an RLC layer or a MAC layer.

In a possible implementation, the first data frame includes a second field, a third field, and a fourth field, the second field indicates that the first data frame is a data frame for delivering the first container, the third field indicates that a protocol layer receiving the first data frame is an RLC layer or a MAC layer, and the fourth field indicates that a transmission direction of the first data frame is from the CU to the DU.

In a possible implementation, the first data frame includes a second field and a fourth field, the second field indicates that the first data frame is a data frame for delivering the first container, the second field further indicates that a protocol layer receiving the first data frame is an RLC layer or a MAC layer, and the fourth field indicates that a transmission direction of the first data frame is from the CU to the DU.

In a possible implementation, the first data frame includes a second field, the second field indicates that the first data frame is a data frame for delivering the first container, the second field further indicates that a protocol layer receiving the first data frame is an RLC layer or a MAC layer, and the second field further indicates that a transmission direction of the first data frame is from the CU to the DU.

According to a second aspect, this application provides a control information transmission method. The method is applied to a user plane of a receiving end. The method includes: receiving a first control packet at a first protocol layer, where the first control packet includes a first container, and the first container includes first-type control information; decapsulating the first control packet at the first protocol layer to obtain the first container; and sending the first container to a second protocol layer at the first protocol layer, where the first protocol layer is lower than the second protocol layer.

For beneficial effects of the second aspect, refer to the descriptions of the first aspect. Details are not described herein.

In a possible implementation, the first control packet includes indication information and the first container, and the indication information indicates that the first control packet is a control packet for delivering the first container.

In a possible implementation, the method further includes: receiving a second control packet at the first protocol layer, where the second control packet includes a first container, and the first container includes second-type control information; decapsulating the second control packet at the first protocol layer, to obtain the first container; and sending the first container to the second protocol layer at the first protocol layer.

In a possible implementation, when the second protocol layer is a service data adaptation protocol PDCP layer, the first protocol layer is a radio link control RLC layer or a media access control MAC layer; or when the second protocol layer is an RLC layer, the first protocol layer is a MAC layer.

In a possible implementation, the first protocol layer is located in a distributed unit DU, and the second protocol layer is located in a central unit CU; and sending the first container to the second protocol layer at the first protocol layer may be specifically implemented as: sending a first data frame to the CU through the DU, where the first data frame includes the first container.

In a possible implementation, the first data frame includes a second field and a third field, the second field indicates that the first data frame is a data frame for delivering the first container, the second field further indicates that a transmission direction of the first data frame is from the DU to the CU, and the third field indicates that a protocol layer sending the first data frame is an RLC layer or a MAC layer.

In a possible implementation, the first data frame includes a second field, a third field, and a fourth field, the second field indicates that the first data frame is a data frame for delivering the first container, the third field is used to send an indication that the protocol layer of the first data frame is an RLC layer or a MAC layer, and the fourth field indicates that a transmission direction of the first data frame is from the DU to the CU.

In a possible implementation, the first data frame includes a second field and a fourth field, the second field indicates that the first data frame is a data frame for delivering the first container, the second field further indicates that a protocol layer sending the first data frame is an RLC layer or a MAC layer, and the fourth field indicates that a transmission direction of the first data frame is from the DU to the CU.

In a possible implementation, the first data frame includes a second field, the second field indicates that the first data frame is a data frame for delivering the first container, the second field further indicates that a protocol layer sending the first data frame is an RLC layer or a MAC layer, and the second field further indicates that a transmission direction of the first data frame is from the DU to the CU.

In a possible implementation, the first data frame is an assistance information data frame or a user data frame.

According to a third aspect, this application provides a communication apparatus. The communication apparatus may alternatively be a chip system. The communication apparatus may perform the method according to the first aspect. A function of the communication apparatus may be implemented by hardware, or may be implemented by hardware executing corresponding software. The hardware or the software includes one or more units or modules corresponding to the foregoing functions. The unit or the module may be the software and/or the hardware. For operations performed by the communication apparatus and beneficial effects thereof, refer to the method according to the first aspect and beneficial effects thereof. Repeated parts are not described again.

According to a fourth aspect, this application provides a communication apparatus. The communication apparatus may alternatively be a chip system. The communication apparatus may perform the method according to the second aspect. A function of the communication apparatus may be implemented by hardware, or may be implemented by hardware executing corresponding software. The hardware or the software includes one or more units or modules corresponding to the foregoing functions. The unit or the module may be the software and/or the hardware. For operations performed by the communication apparatus and beneficial effects thereof, refer to the method according to the second aspect and beneficial effects thereof. Repeated parts are not described again.

According to a fifth aspect, this application provides a communication apparatus. The communication apparatus includes a processor, and when the processor invokes a computer program in a memory, the method according to the first aspect or the second aspect and the possible implementations of the method according to the first aspect or the second aspect are performed.

In a possible implementation, the communication apparatus further includes the memory. The memory and the processor are coupled to each other. Optionally, the memory is integrated with the processor.

In a possible implementation, the communication apparatus further includes a transceiver. The transceiver is configured to send or receive data and/or signaling.

According to a sixth aspect, this application provides a communication apparatus. The communication apparatus includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to the first aspect or the second aspect and the possible implementations of the method according to the first aspect or the second aspect through a logic circuit or by executing code instructions.

According to a seventh aspect, this application provides a computer-readable storage medium. The storage medium stores a computer program or instructions, and when the computer program or the instructions are executed by a communication apparatus, the method according to the first aspect or the second aspect and the possible implementations of the method according to the first aspect or the second aspect are implemented.

According to an eighth aspect, an embodiment of this application provides a computer program or a computer program product, including code or instructions. When the code or the instructions are run on a computer, the computer is caused to perform the method according to the first aspect or the second aspect and the possible implementations of the method according to the first aspect or the second aspect.

According to a ninth aspect, an embodiment of this application provides a communication system. The communication system includes the communication apparatus configured to perform the method according to the first aspect and the communication apparatus configured to perform the method according to the second aspect.

According to a tenth aspect, this application provides a chip. The chip includes a processor and a communication interface. The processor is configured to cause the chip to perform the method according to any one of the first aspect or the possible implementations of the first aspect, or the processor is configured to cause the chip to perform the method according to any one of the second aspect or the possible implementations of the second aspect.

### BRIEF DESCRIPTION OF DRAWINGS

FIG. 1 is a diagram of a communication system according to an embodiment of this application;
FIG. 2 is a diagram of a layered protocol stack design used for an NR air interface according to an embodiment of this application;
FIG. 3 is a diagram of data sending according to an embodiment of this application;
FIG. 4 is a schematic flowchart of a control information transmission method according to an embodiment of this application;
FIG. 5 is a diagram of a structure of a first container according to an embodiment of this application;
FIG. 6 is a diagram of another structure of a first container according to an embodiment of this application;
FIG. 7 is a diagram of another structure of a first container according to an embodiment of this application;
FIG. 8 is a diagram of a structure of a first control packet according to an embodiment of this application;
FIG. 9 is a diagram of another structure of a first control packet according to an embodiment of this application;
FIG. 10 is a diagram of another structure of a first control packet according to an embodiment of this application;
FIG. 11 is a diagram of a structure of a first data frame according to an embodiment of this application;
FIG. 12 is a diagram of another structure of a first data frame according to an embodiment of this application;
FIG. 13 is a diagram of another structure of a first data frame according to an embodiment of this application;
FIG. 14 is a diagram of another structure of a first data frame according to an embodiment of this application;
FIG. 15 is a diagram of another structure of a first data frame according to an embodiment of this application;
FIG. 16 is a diagram of another structure of a first data frame according to an embodiment of this application;
FIG. 17 is a diagram of a structure of a communication apparatus according to an embodiment of this application;
FIG. 18 is a diagram of a structure of another communication apparatus according to an embodiment of this application; and
FIG. 19 is a diagram of a structure of a chip according to an embodiment of this application.

### DESCRIPTION OF EMBODIMENTS

The following further describes specific embodiments of this application in detail with reference to accompanying drawings.

The terms "first", "second", and the like in the specification, claims, and accompanying drawings of this application are used to distinguish between different objects, and are not used to describe a specific order. In addition, terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in the specification means that a specific feature, structure, or characteristic described with reference to embodiments may be included in at least one embodiment of this application. The phrase shown in various locations in the specification may not necessarily refer to a same embodiment, and is not an independent or optional embodiment exclusive from another embodiment. It is explicitly and implicitly understood by a person skilled in the art that embodiments described in the specification may be combined with another embodiment.

In this application, "at least one (item)" means one or more, "a plurality of" means two or more, "at least two (items)" means two, three, or more, and "and/or" is used to describe a correspondence between associated objects, and indicates that three relationships may exist. For example, "A and/or B" may indicate the following three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural.

The following describes a system architecture in embodiments of this application.

For ease of understanding of the technical solutions in embodiments of this application, the following briefly describes a system architecture of a method provided in embodiments of this application. It may be understood that the system architecture described in embodiments of this application is intended to describe the technical solutions in embodiments of this application more clearly, and does not constitute any limitation on the technical solutions provided in embodiments of this application.

The technical solutions in embodiments of this application may be applied to various communication systems, for example, a satellite communication system and a conventional mobile communication system. The satellite communication system may be integrated with the conventional mobile communication system (that is, a terrestrial communication system). The communication system is, for example, a wireless local area network (wireless local area network, WLAN) communication system, a wireless fidelity (wireless fidelity, Wi-Fi) system, a long term evolution (long term evolution, LTE) system, an LTE frequency division duplex (frequency division duplex, FDD) system, an LTE time division duplex (time division duplex, TDD) system, a 5th generation (5th generation, 5G) system or a new radio (new radio, NR) system, another future communication system like a 6th generation (6th generation, 6G) system, or a communication system that supports convergence of a plurality of wireless technologies, for example, a system that integrates a terrestrial mobile communication network and a non-terrestrial network (non-terrestrial network, NTN) and that may be applied to an uncrewed aerial vehicle, a satellite communication system, a high altitude platform station (high altitude platform station, HAPS) communication, or the like.

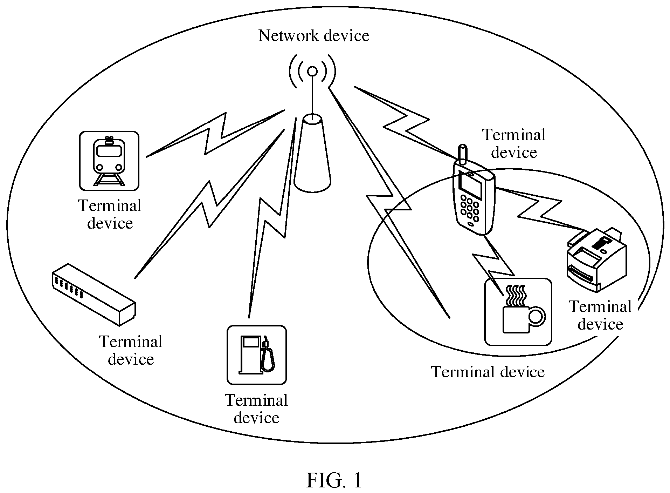

FIG. 1 shows an example of a communication system applicable to an embodiment of this application. The communication system includes at least one network device and at least one terminal device. In FIG. 1, one network device and a plurality of terminal devices are used as an example. The plurality of terminal devices may be a cellular phone, a smartphone, a portable computer, a handheld communication device, a handheld compute device, a satellite radio apparatus, a global positioning system, a personal digital assistant (personal digital assistant, PDA), and/or any other suitable device configured to perform communication in a wireless communication system. All of the terminal devices may be connected to the network device. All the plurality of terminal devices can communicate with the network device. In addition, the terminal devices may also communicate with each other. Certainly, a quantity of terminal devices and a quantity of network devices in FIG. 1 are merely an example, and there may alternatively be more or fewer terminal devices and more or fewer network devices.

The terminal device in embodiments of this application may also be referred to as a terminal for short, and is an entity configured to receive or transmit a signal on a user side. The terminal device may be a device that provides voice and/or data connectivity for a user, for example, a handheld device or a vehicle-mounted device that has a wireless connection function. The terminal device may alternatively be another processing device connected to a wireless modem. The terminal device may communicate with a radio access network (radio access network, RAN). The terminal device may also be referred to as a wireless terminal, a subscriber unit (subscriber unit), a subscriber station (subscriber station), a mobile station (mobile station), a mobile console (mobile), a remote station (remote station), an access point (access point), a remote terminal (remote terminal), an access terminal (access terminal), a user terminal (user terminal), a user agent (user agent), a user device (user device), UE, or the like. The terminal device may be a mobile terminal, for example, a mobile phone (also referred to as a "cellular" phone), or a computer that has the mobile terminal, for example, may be a portable, pocket-sized, handheld, computer built-in, or vehicle-mounted mobile apparatus that exchanges a voice and/or data with the radio access network. For example, the terminal device may alternatively be a personal communication service (personal communication service, PCS) phone, a cordless phone, a session initiation protocol (session initiation protocol, SIP) phone, a wireless local loop (wireless local loop, WLL) station, a personal digital assistant (personal digital assistant, PDA), or another device. Common terminal devices include, for example, a mobile phone, a tablet computer, a notebook computer, a palmtop computer, a mobile internet device (mobile internet device, MID), and a wearable device, such as a smartwatch, a smartband, a pedometer. However, embodiments of this application are not limited thereto.

A device form of the terminal device is not limited in embodiments of this application. An apparatus configured to implement a function of the terminal device may be the terminal device, or may be an apparatus that can support the terminal device in implementing the function, for example, a chip system. The apparatus may be installed in the terminal device or used in cooperation with the terminal device. In this embodiment of this application, the chip system may include a chip, or may include a chip and another discrete component.

The network device is a network-side entity configured to send a signal, receive a signal, or send a signal and receive a signal. The network device may be an apparatus deployed in the radio access network (radio access network, RAN) to provide a wireless communication function for the terminal.

In a possible scenario, the network device may be a device having a function of a base station, for example, an evolved NodeB (evolved NodeB, eNodeB), a transmitting and receiving point (transmitting and receiving point, TRP), a transmitting point (transmitting point, TP), a next generation NodeB (next generation NodeB, gNB), a next generation base station in a 6G mobile communication system, an integrated access and backhaul (integrated access and backhaul, IAB) node, or a non-terrestrial network device, that is, a device, a satellite, or the like that may be deployed on a high altitude platform station. The network device may be a transmission reception point (transmission reception point, TRP), a base station, or a control node in various forms, for example, a network controller or a wireless controller. Specifically, the network device may be a macro base station in various forms, a micro base station (also referred to as a small cell) in a heterogeneous network (heterogeneous network, HetNet) scenario, a relay station, an access point (access point, AP), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseBand unit, BBU) and a radio frequency unit (remote radio unit, RRU) in a distributed base station scenario, a transmission point (transmitting and receiving point, TRP), a transmitting point (transmitting point, TP), a mobile switching center, or the like, or may be an antenna panel of the base station. The control node may be connected to a plurality of base stations, and configure resources for a plurality of terminals covered by the plurality of base stations. In systems using different radio access technologies, names of devices having the function of the base station may be different. For example, the device may be a gNB in a 5G, a network-side device in a network after the 5G, a network device in a future evolved public land mobile (communication) network (public land mobile network, PLMN), or a device that has a function of a base station in device-to-device (device-to-device, D2D) communication, machine-to-machine (machine-to-machine, M2M) communication, or internet of vehicles communication. A specific name of the network device is not limited in this application. The network device may alternatively be a baseband unit pool (BBU pool), an RRU, or the like in an open access network (open RAN, O-RAN or ORAN) or a cloud radio access network (cloud radio access network, CRAN).

In another possible scenario, a plurality of network devices collaborate to assist the terminal in implementing radio access, and different network devices respectively implement some functions of the base station. For example, the network device may include a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio equipment or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

A form of the network device is not limited in embodiments of this application. An apparatus configured to implement a function of the network device may be the network device, or may be an apparatus that can support the network device in implementing the function, for example, a chip system. The apparatus may be installed in the network device or used in cooperation with the network device.

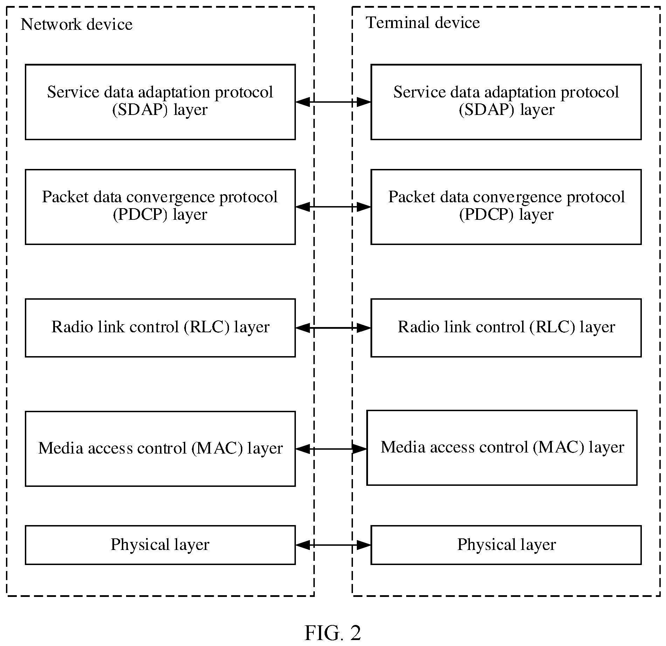

FIG. 2 shows a layered protocol stack design used for an NR air interface. Specifically, an NR user plane protocol stack includes a service data adaptation protocol (service data adaptation protocol, SDAP) layer, a packet data convergence protocol (packet data convergence protocol, PDCP) layer, a radio link control (radio link control, RLC) layer, a media access control (media access control, MAC) layer, and a physical layer.

In a design of a user plane protocol, a transmitting end and a receiving end may exchange control information of a specific protocol layer, for example, control information of a PDCP layer. Control information is used to manage functions like variable updates, transmission/reception window adjustments, buffer updates, packet discarding, packet retransmission, status report delivery, and control information compression at that specific protocol layer. Upon receiving the control information, a receiving end performs corresponding processing based on the type of the control information.

Regardless of whether control information or a data message is sent from a PDCP layer to an RLC layer, the RLC layer encapsulates the control information or the data message into an RLC data protocol data unit (data protocol data unit, data PDU), and then sends RLC data protocol data units in an order of reception time.

Immersive communication is a communication technology that emphasizes "user experience" and provides users with an immersive experience, for example, virtual reality (virtual reality, VR), augmented reality (augmented reality, AR), or holographic projection. In the immersive communication, network congestion compromises user experience. Therefore, the immersive communication has a high requirement on a network rate.

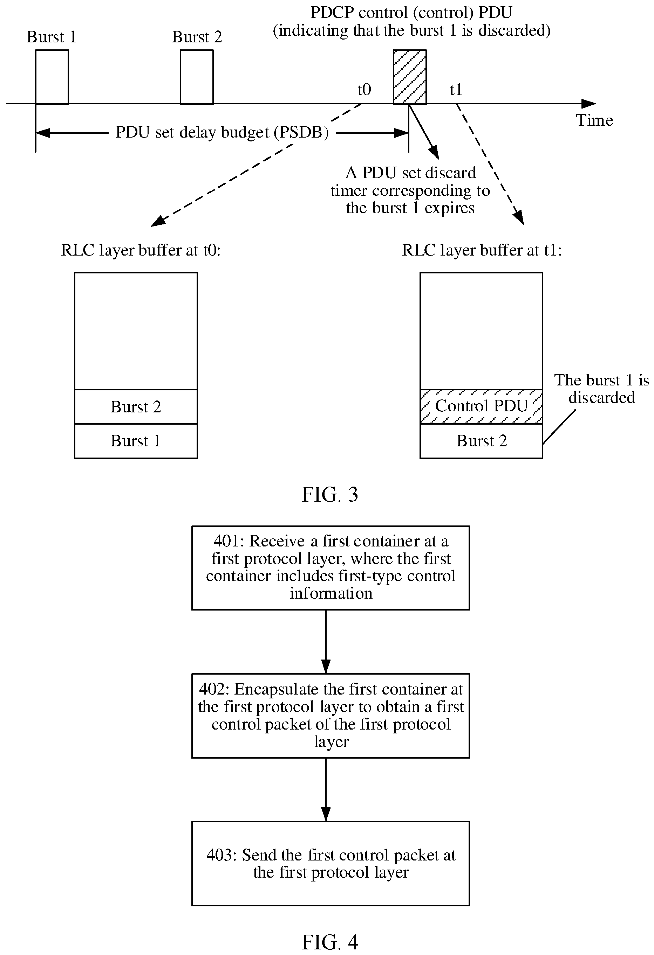

In the immersive communication, rapid information delivery is required between PDCP layers. For example, after a transmitting end actively discards a data frame, a packet set, or a packet, the transmitting end needs to promptly notify a receiving end, to avoid introducing a PDCP reordering delay to the receiving end. For example, as shown in FIG. 3, the PDCP sequentially sends a burst (burst) 1 and a burst 2 to an RLC layer, and the RLC layer buffers the burst 1 and the burst 2 in an RLC buffer. For example, at a time t0, the RLC buffer includes the burst 1 and the burst 2. A length of a discard timer associated with a packet in the burst 1 is set to a PDU set delay budget (PDU set delay budget, PSDB). When a packet corresponding to the burst 1 is not sent or only partially sent before the timer expires, the transmitting end discards the burst 1 after the timer expires. At the same time, the PDCP layer generates a PDCP control (control) PDU to indicate that the burst 1 is discarded. After the PDCP layer sends the PDCP control PDU to the RLC layer, the PDCP control PDU is buffered in the RLC buffer. Because the PDCP control PDU arrives at the RLC buffer later than the burst 2, the PDCP control PDU is queued after the burst 2, and can be sent only after the burst 2 is sent. For example, at a time t1, the RLC buffer includes the burst 2 and the PDCP control PDU, the PDCP control PDU is queued after the burst 2, and the burst 1 in the RLC buffer is discarded. Consequently, queuing time of the PDCP control PDU is long. This queuing delay is accumulated into the PDCP reordering delay at a receiving side, affecting user service experience. Therefore, how to reduce transmission delay of control information is a pressing technical challenge that needs to be addressed.

To reduce the transmission delay of the control information, an embodiment of this application provides a control information transmission method. As shown in FIG. 4, the control information transmission method includes step 401 to step 403. The method shown in FIG. 4 is performed by a transmitting end, or the method shown in FIG. 4 may be performed by a chip in the transmitting end. In FIG. 4, an example in which the method is performed by the transmitting end is used for description. An execution entity of the control information transmission method is not limited in this embodiment of this application. The transmitting end may be the terminal device or the network device in the communication system shown in FIG. 1.

401: Receive a first container (container) at a first protocol layer, where the first container includes first-type control information.

In this embodiment of this application, the first protocol layer is a protocol layer in a user plane of the transmitting end. Optionally, the first protocol layer is an RLC layer or a MAC layer. Alternatively, the first protocol layer may be another protocol layer. This is not limited in embodiments of this application. Control information is used to manage functions like variable updates, transmission/reception window adjustments, buffer updates, packet discarding, packet retransmission, status report delivery, and control information compression at that specific protocol layer. Upon receiving the control information, a receiving end performs corresponding processing based on the type of the control information.

In a possible implementation, the first container is generated by a second protocol layer. Specifically, when the second protocol layer is triggered to transmit the control information, the transmitting end encapsulates, at the second protocol layer, the control information in a format of the first container, and sends the first container to the first protocol layer through the second protocol layer. A container may be used to carry various types of information. Apart from the protocol layer entity that generates the container, another protocol layer at the transmitting end may not need to read or confirm content in the container. Using a container to transmit control information helps reduce standardization efforts and protocol changes required for future extensions of new cross-layer signaling exchange, as well as complexity of product implementation. In comparison with a conventional approach of defining each cross-layer exchange signaling separately, this method offers greater scalability.

In a possible implementation, the first container further includes first information, and the first information indicates a type (for example, a first type) of the control information included in the first container. In other words, this may also be understood as that the first information identifies content included in the first container. For example, the second protocol layer is a PDCP layer, and the first information indicates that the control information included in the first container indicates a largest sequence number (sequence number, SN) of a PDCP SDU discarded by a PDCP entity at the transmitting end. Alternatively, this may also be understood as that the first information indicates that the first container is for delivering the largest SN of the PDCP SDU discarded by the PDCP entity at the transmitting end, and the content of the control information included in the first container is a PDCP SN. Upon receiving the first container from the PDCP entity at the transmitting end, a PDCP entity at the receiving end can quickly determine, through the first information, the type of the control information included in the first container.

The first protocol layer is lower than the second protocol layer, and the second protocol layer is a protocol layer in the user plane of the transmitting end. Optionally, when the second protocol layer is a PDCP layer, the first protocol layer is an RLC layer or a MAC layer. When the second protocol layer is an RLC layer, the first protocol layer is a MAC layer. In addition, the first protocol layer and the second protocol layer may be other protocol layers in the user plane of the transmitting end. This is not limited in embodiments of this application. If the second protocol layer is a PDCP layer and the first protocol layer is a MAC layer, the PDCP layer sends the first container to the MAC layer. Specifically, the PDCP layer sends the first container to the MAC layer in a cross-layer information delivery manner. In other words, the RLC layer does not need to sense delivery of the first container between the PDCP layer and the MAC layer.

Optionally, when the first protocol layer is an RLC layer and the second protocol layer is a PDCP layer, the first container may be referred to as a PDCP-RLC container; when the first protocol layer is a MAC layer and the second protocol layer is a PDCP layer, the first container may be referred to as a PDCP-MAC container; or when the first protocol layer is a MAC layer and the second protocol layer is an RLC layer, the first container may be referred to as an RLC-MAC container. A name of the first container is not limited in embodiments of this application.

Optionally, when the second protocol layer is a PDCP layer, the first-type control information included in the first container may be a PDCP status report, robust header compression (robust header compression, ROHC) feedback information, ethernet header compression (ethernet header compression, EHC) feedback information, uplink data compression (uplink data compression, UDC) feedback information, or the like. When the second protocol layer is an RLC layer, the first-type control information included in the first container may be an RLC status (STATUS) PDU. In addition to the foregoing types of control information, the first-type control information may alternatively be another type of control information. This is not limited in embodiments of this application.

In a possible implementation, the transmitting end may also send, to the first protocol layer through the second protocol layer, a first container including second-type control information. Timing for sending the first-type control information and the second-type control information at the first protocol layer is not limited in embodiments of this application. For example, the first protocol layer may send the first-type control information first, followed by the second-type control information, or send the first-type control information and the second-type control information simultaneously. The first-type control information is different from the second-type control information.

For example, it is assumed that the second protocol layer is a PDCP layer, the first-type control information is control information for delivering a largest SN of a PDCP SDU discarded by a PDCP entity at the transmitting end, and the content included in the first-type control information is one PDCP SN; and the second-type control information is control information for delivering a quantity of packets that are in one PDU set and that are successfully received by a PDCP entity on a receiving side, and content included in the second-type control information is one PDU set SN and the quantity of received packets.

For another example, the first-type control information is a PDCP status report, and the second-type control information is UDC feedback information.

For another example, both the first-type control information and the second-type control information are PDCP status reports, but content of the status report corresponding to the first-type control information is different from content of the status report corresponding to the second-type control information.

With reference to the foregoing implementation in which the first container includes the first information, the first information indicates the type of the control information included in the first container. Therefore, the first information included in the first container including the first-type control information is different from first information included in the first container including the second-type control information.

The first-type control information and the second-type control information described above are used merely as examples. Actually, the second protocol layer may further send more types of control information to the first protocol layer for example, third-type control information. This is not limited in embodiments of this application.

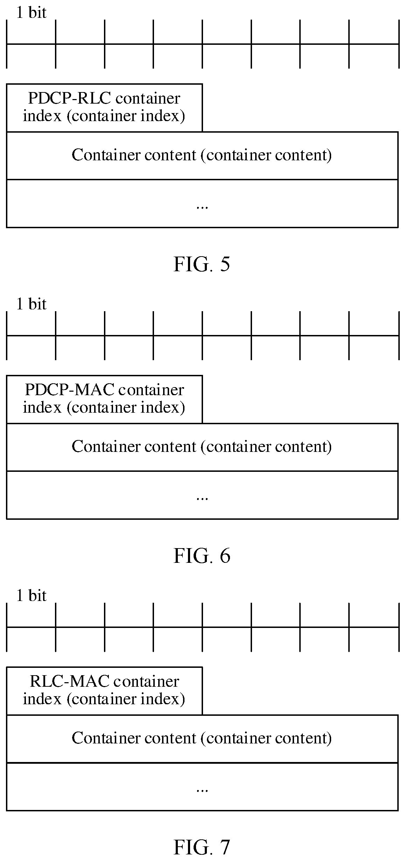

The following describes a plurality of formats of the first container based on different cases of the first protocol layer and the second protocol layer.
1. When the first protocol layer is an RLC layer and the second protocol layer is a PDCP layer, a format of the first container may be shown in FIG. 5. The first container includes at least two fields, where one field is a PDCP-RLC container index (container index) field, and the field indicates a type (for example, a first type) of control information included in the first container. This may also be understood as that the field identifies a type of the first container. With reference to the foregoing implementation in which the first container includes the first information, the field is for delivering the first information. Another field is a container content (container content) field that is for delivering specific content of the control information. For two first containers including different types of control information (for example, the first container including the first-type control information and the first container including the second-type control information), values of PDCP-RLC container index fields included in the two first containers are different.

For example, when a value of the PDCP-RLC container index field is 0, it indicates that the first container is for delivering a largest SN of a PDCP SDU discarded by a PDCP entity at a transmitting end, and content included in the container context field is one PDCP SN. When a value of the PDCP-RLC container index is 1, the first container is for delivering a quantity of packets that are in one PDU set and that are successfully received by a PDCP entity on a receiving side, and the container content field includes one PDU set SN and the quantity of received packets.

A length of the PDCP-RLC container index field shown in FIG. 5 is four bits, and a length of the container content field is at least one octet. Names and lengths of the two fields are not limited in embodiments of this application. In addition, the first container may further include another field. This is not limited in embodiments of this application.

2. When the first protocol layer is a MAC layer and the second protocol layer is a PDCP layer, a format of the first container may be shown in FIG. 6. The first container includes at least two fields, where one field is a PDCP-MAC container index (container index) field, and the field indicates a type (for example, a first type) of control information included in the first container. This may also be understood as that the field identifies a type of the first container. With reference to the foregoing implementation in which the first container includes the first information, the field is for delivering the first information. Another field is a container content field that is for delivering specific content of the control information. For two first containers including different types of control information (for example, the first container including the first-type control information and the first container including the second-type control information), values of PDCP-MAC container index fields included in the two first containers are different.

For example, when a value of the PDCP-MAC container index field is 0, it indicates that the first container is for delivering a largest SN of a PDCP SDU discarded by a PDCP entity at a transmitting end, and content included in the container context field is one PDCP SN. When the value of the PDCP-MAC container index is 1, the first container is for delivering a quantity of packets that are in one PDU set and that are successfully received by a PDCP entity on a receiving side, and the container content field includes one PDU set SN and the quantity of received packets.

A length of the PDCP-MAC container index field shown in FIG. 6 is four bits, and a length of the container content field is at least one octet. Names and lengths of the two fields are not limited in embodiments of this application. In addition, the first container may further include another field. This is not limited in embodiments of this application.

3. When the first protocol layer is a MAC layer and the second protocol layer is an RLC layer, a format of the first container may be shown in FIG. 7. The first container includes at least two fields, where one field is an RLC-MAC container index (container index) field, and the field indicates a type (for example, a first type) of control information included in the first container. This may also be understood as that the field identifies a type of the first container. With reference to the foregoing implementation in which the first container includes the first information, the field is for delivering the first information. Another field is a container content field that is for delivering specific content of the control information. For two first containers including different types of control information (for example, the first container including the first-type control information and the first container including the second-type control information), values of RLC-MAC container index fields included in the two first containers are different.

A length of the RLC-MAC container index field shown in FIG. 7 is four bits, and a length of the container content field is at least one octet. Names and lengths of the two fields are not limited in embodiments of this application. In addition, the first container may further include another field. This is not limited in embodiments of this application.

402: Encapsulate the first container at the first protocol layer to obtain a first control packet of the first protocol layer.

In this embodiment of this application, the first control packet includes the first container. In other words, this may be understood as that the first control packet includes control information of the second protocol layer. The first protocol layer may deliver the control information of the second protocol layer in the first control packet. A control packet is used to carry control information. For example, in addition to the first container received at the first protocol layer, if the first protocol layer generates control information of the first protocol layer, the first protocol layer also encapsulates the control information into a control packet. Optionally, the control packet may also be referred to as a control unit or a control element. Further, optionally, when the first protocol layer is an RLC layer, the control packet is an RLC control PDU; or when the first protocol layer is a MAC layer, the control packet is a media access control control element (media access control control element, MAC CE).

In a possible implementation, the first control packet includes indication information and the first container, and the indication information indicates that the control packet is a control packet for delivering the first container. In other words, the indication information indicates that the first control packet is a control packet for delivering the control information of the second protocol layer.

Optionally, the first control packet described above includes the first-type control information, and with reference to the foregoing implementation in which the first container including the second-type control information may be further sent to the first protocol layer through the second protocol layer, the first protocol layer also encapsulates the first container into a second control packet. Specifically, the transmitting end receives the first container at the first protocol layer, where the first container includes the second-type control information; the transmitting end encapsulates the first container at the first protocol layer, to obtain the second control packet of the first protocol layer; and the transmitting end sends the second control packet at the first protocol layer. The first control packet and the second control packet mentioned in this embodiment of this application are two different control packets. Specifically, a type of the control information included in the first control packet is different from a type of the control information included in the second control packet.

For ease of differentiation, the first container including the first-type control information is referred to as a first container 1, the first container including the second-type control information is referred to as a first container 2, the first control packet is obtained by encapsulating the first container 1 at the first protocol layer, and the second control packet is obtained by encapsulating the first container 2 at the first protocol layer. The first container 1 and the first container 2 are same containers. In other words, formats of the first container 1 and the first container 2 are the same, but a main difference between the first container 1 and the first container 2 lies in that types of control information included in the two containers are different.

For example, the first-type control information is control information for delivering a largest SN of a PDCP SDU discarded by a PDCP entity at the transmitting end, and the second-type control information is control information for delivering a quantity of packets that are in one PDU set and that are successfully received by a PDCP entity on a receiving side. The second protocol layer encapsulates the first-type control information in the format of the first container to obtain the first container 1, where content of the control information included in the first container 1 is one PDCP SN. The second protocol layer encapsulates the second-type control information in the format of the first container to obtain the first container 2, where content of the control information included in the first container 2 is one PDU set SN and the quantity of received packets. After receiving the first container 1, the first protocol layer encapsulates the first container 1 to obtain the first control packet, where content of control information included in the first control packet is one PDCP SN. After receiving the first container 2, the first protocol layer encapsulates the first container 2 to obtain the second control packet, where content of control information included in the second control packet is one PDU set SN and the quantity of received packets.

It should be further noted that, although the type of the control information included in the first control packet is different from the type of the control information included in the second control packet, the indication information included in the foregoing described control packet indicates that the control packet is a control packet for delivering the first container. Therefore, the first control packet 1 and the first control packet 2 include same indication information.

The first-type control information and the second-type control information described above are used merely as examples. Actually, the second protocol layer may further send more types of control information, for example, the third-type control information, to the first protocol layer. Correspondingly, the first protocol layer may further obtain more control packets through encapsulation, for example, a third control packet. However, indication information included in these control packets is the same. This is not limited in embodiments of this application. In addition, in embodiments of this application, timing for encapsulating the second control packet and the first control packet is not limited, and timing for sending the second control packet and the first control packet is not limited.

In a possible implementation, a priority of sending the first control packet at the first protocol layer is higher than a priority of sending a data packet at the first protocol layer. The data packet is a packet that carries a data message. For example, when receiving a data message from the second protocol layer, the first protocol layer encapsulates the data message to obtain the data packet. Based on this implementation, the first control packet including the first container is preferentially sent, so that a delay of queuing the control information of the second protocol layer at the first protocol layer for sending is shortened, thereby reducing the transmission delay of the control information.

When the first protocol layer is an RLC layer, the data packet is an RLC data (data) PDU. Optionally, the priority of sending the first control packet at the first protocol layer is lower than a priority of sending an RLC STATUS PDU at the first protocol layer. The RLC STATUS PDU indicates a data receiving status of the RLC layer, and the RLC STATUS PDU has a higher sending priority, so that the receiving end can promptly determine the data receiving status of the RLC layer.

When the first protocol layer is a MAC layer, the data packet is a MAC service data unit (Service Data Unit, SDU) delivered through a data transmission channel.

Optionally, the first control packet further includes a first field, and the first field indicates information about a bearer or second protocol layer entity where the first container included in the first control packet is from. Further, optionally, the first field is a data radio bearer identity (data radio bearer ID, DRB ID) field or an identity of logical channel (identity of logical channel, LCH ID) field. In other words, content indicated by the first field may also be understood as a DRB or a logical channel corresponding to the first container, and a protocol layer associated with the DRB or the logical channel includes the second protocol layer. The DRB ID indicates the DRB corresponding to the first container, the DRB is associated with the second protocol layer, the LCH ID indicates an identifier of an interface (a logical channel) between the MAC layer and the RLC layer, the LCH ID indicates the logical channel corresponding to the first container, and the logical channel is associated with the second protocol layer. In this manner, the receiving end can determine, based on the first field, that the first control packet needs to be delivered to the second protocol layer or to a protocol layer entity associated with the DRB ID or the LCH ID for processing.

Optionally, after the first protocol layer encapsulates the first control packet, if the first protocol layer has no available grant (grant) resources to transmit the first control packet, or an available grant resource cannot accommodate the first control packet, the first protocol layer may send a scheduling request (scheduling request, SR) signal, where the SR signal is used to request a resource for transmitting the first control packet. Based on the method, a resource can be obtained as soon as possible for transmitting the first control packet to reduce the transmission delay of the first control packet.

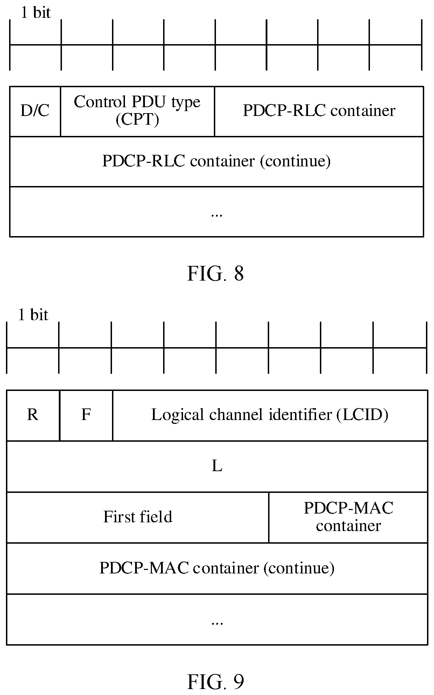

The following describes a plurality of possible formats of the first control packet based on different cases of the first protocol layer and the second protocol layer.
1. When the first protocol layer is an RLC layer and the second protocol layer is a PDCP layer, a format of the first control packet may be shown in FIG. 8. The first control packet includes the following three fields.

A D/C field indicates whether the packet is a control packet or a data packet. Specifically, the D/C field indicates that the packet is an RLC control PDU or an RLC data PDU. In this embodiment of this application, the D/C field indicates that a type of the packet is a control packet, that is, indicates that the packet is an RLC control PDU. For example, a value of D/C is 0, indicating that the first control packet is a control packet.

A control PDU type (control PDU type, CPT) field indicates that the first control packet is a control packet for delivering the first container. In other words, this may also be understood as that the CPT field indicates that the first control packet is a PDCP container delivery (delivery) control PDU of the RLC layer. With reference to the foregoing implementation in which the first control packet includes indication information, the field is for delivering the indication information, and the indication information indicates that the first control packet is a control packet for delivering the first container. For example, a value of the CPT field is 001, indicating that the first control packet is a first control packet for delivering the first container, or indicating that the first control packet is a PDCP container delivery control PDU of the RLC layer. The value of the CPT field may alternatively be another value, to indicate that the first control packet is a control packet for delivering the first container. This is not limited in embodiments of this application.

A PDCP-RLC container field is content included in the first container.

A length of the D/C field shown in FIG. 8 is one bit, a length of the CPT field is three bits, and a length of the PDCP-RLC container field is at least 12 bits. It should be further noted that names and lengths of the fields included in the first control packet are not limited in embodiments of this application.

With reference to the second control packet described above, a format of the second control packet is the same as the format of the first control packet. In other words, the format shown in FIG. 8 is also applicable to the second control packet. When the format shown in FIG. 8 is used, values of D/C fields included in the first control packet and the second control packet are the same, and values of CPT fields included in the first control packet and the second control packet are the same. Because the first control packet and the second control packet include different types of control information, the PDCP-RLC container field in the first control packet and a PDCP-RLC container field in the second control packet include different content.

2. When the first protocol layer is a MAC layer and the second protocol layer is a PDCP layer, a format of the first control packet may be shown in FIG. 9. The first control packet includes the following six fields.

An R field is a reserved field, an F field indicates that a length of an L field is one octet or two octets, and the L field indicates an octet length of the control packet.

A logical channel identifier (logical channel identifier, LCID) field indicates that the first control packet is a control packet for delivering the first container. In other words, this may also be understood as that the LCID identifies a PDCP container delivery MAC CE. The LCID field and an LCH ID field are different fields. The LCID field is a field in a MAC layer data unit header, and may identify a type of a MAC CE. Alternatively, the LCID identifies the LCH ID. In other words, similar to the LCH ID, the LCID may indicate an interface (a logical channel) between the MAC layer and the RLC layer. With reference to the foregoing implementation in which the first control packet includes indication information, the field is for delivering the indication information, and the indication information indicates that the first control packet is a control packet for delivering the first container.

A first field is the same as the first field described above, and the first field indicates information about a bearer or second protocol layer entity where the first container included in the first control packet is from. The first field is a DRB ID field or an LCH ID field.

A PDCP-MAC container field is content included in the first container.

As shown in FIG. 9, lengths of the R field and the F field are one bit, a length of the LCID field is six bits, a length of the L field is eight bits, a length of the first field is five bits, and a length of the PDCP-MAC container field is at least 11 bits. It should be further noted that names and lengths of the fields included in the first control packet are not limited in embodiments of this application.

With reference to the second control packet described above, a format of the second control packet is the same as the format of the first control packet. In other words, the format shown in FIG. 9 is also applicable to the second control packet. When the format shown in FIG. 9 is used, in the first control packet and the second control packet, values of R fields are the same, values of F fields are the same, values of LCID fields are the same, values of L fields are the same, and values of first fields are the same. Because the first control packet and the second control packet include different types of control information, the PDCP-MAC container field in the first control packet and a PDCP-MAC container field in the second control packet include different content.

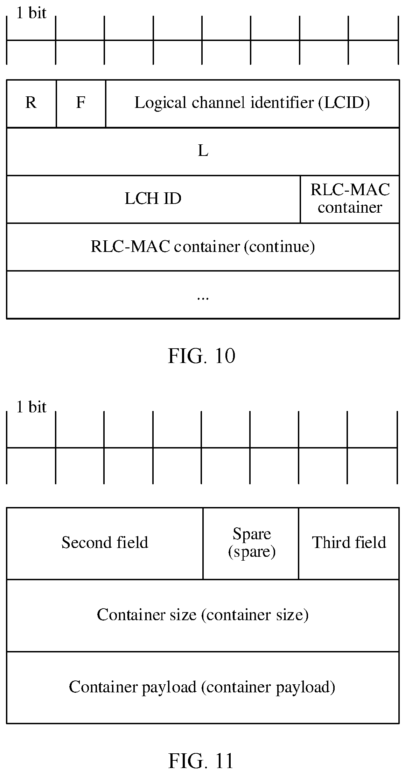

3. When the first protocol layer is a MAC layer and the second protocol layer is an RLC layer, a format of the first control packet may be shown in FIG. 10. The first control packet includes the following six fields.

An R field, an F field, an L field, an LCID field, and an LCH ID are the same as content corresponding to the foregoing descriptions in FIG. 9. An RLC-MAC container field is content included in the first container.

As shown in FIG. 10, lengths of the R field and the F field are one bit, a length of the LCID field is six bits, a length of the L field is eight bits, a length of the LCH ID is six bits, and a length of a PDCP-MAC container field is at least 10 bits. It should be further noted that names and lengths of the fields included in the first control packet are not limited in embodiments of this application.

With reference to the second control packet described above, a format of the second control packet is the same as the format of the first control packet. In other words, the format shown in FIG. 10 is also applicable to the second control packet. When the format shown in FIG. 10 is used, in the first control packet and the second control packet, values of R fields are the same, values of F fields are the same, values of LCID fields are the same, values of L fields are the same, and values of LCH IDs are the same. Because the first control packet and the second control packet include different types of control information, the RLC-MAC container field in the first control packet and an RLC-MAC container field in the second control packet include different content.

It should be further noted that FIG. 8, FIG. 9, and FIG. 10 are merely examples of formats of the first control packet provided in embodiments of this application. The first control packet may include a part of or all fields in the foregoing examples, or the first control packet may further include another field. This is not limited in embodiments of this application.

403: Send the first control packet at the first protocol layer.

Based on the method described in embodiments of this application, when receiving the first container from the second protocol layer, the first protocol layer encapsulates the first container into the first control packet of the first protocol layer. A priority of sending a control packet at the first protocol layer is higher than a priority of sending a data packet. Therefore, according to the method described in embodiments of this application, the delay of queuing the control information of the second protocol layer at the first protocol layer for sending can be shortened, thereby reducing the transmission delay of the control information. In addition, when the first protocol layer is a MAC layer and the second protocol layer is a PDCP layer, the PDCP layer delivers control information to the MAC layer across layers. This can also reduce the transmission delay of the control information. A container may be used to carry various types of information. A protocol layer other than a protocol layer entity that generates the container at the transmitting end may not need to read content in the container. In this embodiment of this application, using a container to transmit control information helps reduce standardization efforts and protocol changes required for future extensions of new cross-layer signaling exchange, as well as complexity of product implementation. In comparison with a conventional approach of defining each cross-layer exchange signaling separately, this method offers greater scalability.

In this embodiment of this application, correspondingly, the receiving end receives the first control packet at the first protocol layer, where the first control packet includes the first container, and the first container includes the first-type control information; the receiving end decapsulates the first control packet at the first protocol layer, to obtain the first container; and the receiving end sends the first container to the second protocol layer at the first protocol layer, where the first protocol layer is lower than the second protocol layer. The receiving end described in this embodiment of this application may be the terminal device or the network device in the communication system shown in FIG. 1.

In a possible implementation, the transmitting end is a network device, the network device includes a CU and a DU, and when the network device uses a CU-DU split architecture, the first protocol layer is located in the DU, and the second protocol layer is located in the CU. In other words, sending the first container to the first protocol layer through the second protocol layer may be specifically implemented as: sending a first data frame to the DU through the CU, where the first data frame includes the first container, and the first data frame is a downlink data frame.

Alternatively, if the receiving end is a network device, the network device includes a CU and a DU, and when the network device uses a CU-DU split architecture, the first protocol layer is located in the DU, and the second protocol layer is located in the CU. In other words, sending the first container to the second protocol layer at the first protocol layer may be specifically implemented as: sending a first data frame to the CU through the DU, where the first data frame includes the first container, and the first data frame is an uplink data frame.

The following describes a plurality of possible formats of the first data frame.

FIG. 11 shows a format of a first data frame according to an embodiment of this application. The first data frame includes the following fields.

A second field indicates that the first data frame is a data frame for delivering a first container. Optionally, the second field further indicates that a transmission direction of the first data frame is from a CU to a DU or from a DU to a CU. For example, when a value of the second field is a first value, the transmission direction of the first data frame is from the CU to the DU, and the first data frame is a downlink data frame; or when a value of the second field is a second value, the transmission direction of the first data frame is from the DU to the CU, and the first data frame is an uplink data frame. Further, optionally, the second field may also be referred to as a PDU type (type) field.

A spare (spare) field indicates a reserved bit.

A third field indicates that a protocol layer receiving the first data frame is an RLC layer or a MAC layer. With reference to the foregoing descriptions, types of the first container may be classified based on different cases of a first protocol layer and a second protocol layer. When the first protocol layer is an RLC layer and the second protocol layer is a PDCP layer, the first container may be referred to as a PDCP-RLC container; or when the first protocol layer is a MAC layer and the second protocol layer is a PDCP layer, the first container may be referred to as a PDCP-MAC container. It may be understood that the third field indicates that the first container included in the first data frame is the PDCP-RLC container or the PDCP-MAC container. For example, when a value of the third field is a third value, the first container is the PDCP-RLC container; or when a value of the third field is a fourth value, the first container is the PDCP-MAC container. Further, optionally, the third field may also be referred to as a container type (container type) field.

A container size (container size) field indicates an octet length of the first container.

A container payload (container payload) field is content included in the first container.

As shown in FIG. 11, a length of the second field is four bits, a length of the spare field is two bits, a length of the third field is two bits, a length of the container size field is one octet, and a length of the container payload field is at least one octet. It should be further noted that names and lengths of the fields included in the first data frame are not limited in embodiments of this application.

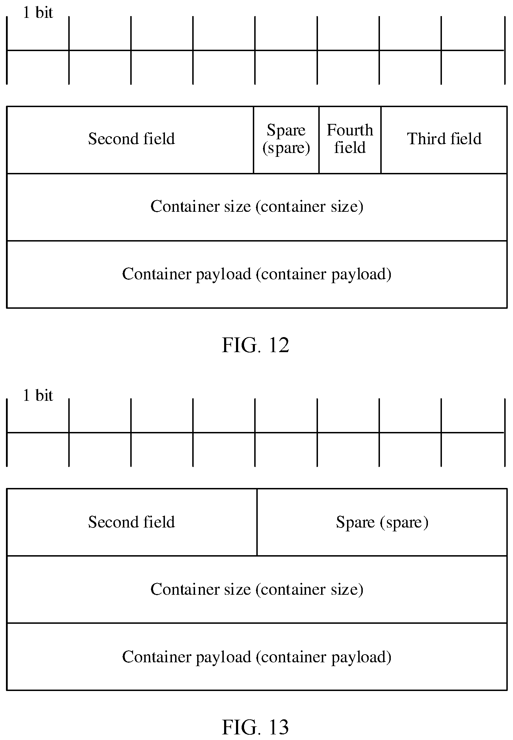

FIG. 12 shows another format of a first data frame according to an embodiment of this application. The first data frame includes the following fields.

A spare field, a third field, a container size field, and a container payload field are the same as content corresponding to descriptions in FIG. 11. Details are not described herein.

A second field indicates that the first data frame is a data frame for delivering a first container.

A fourth field indicates that a transmission direction of the first data frame is from a CU to a DU or from a DU to a CU. For example, when a value of the fourth field is a fifth value, the transmission direction of the first data frame is from the CU to the DU, and the first data frame is a downlink data frame; or when a value of the fourth field is a sixth value, the transmission direction of the first data frame is from the DU to the CU, and the first data frame is an uplink data frame. Further, optionally, the fourth field may also be referred to as a direction (direction) field.

As shown in FIG. 12, a length of the second field is four bits, a length of the spare field is one bit, a length of the third field is two bits, a length of the fourth field is one bit, a length of the container size field is one octet, and a length of the container payload field is at least one octet. It should be further noted that names and lengths of the fields included in the first data frame are not limited in embodiments of this application.

FIG. 13 shows another format of a first data frame according to an embodiment of this application. The first data frame includes the following fields.

A spare field, a container size field, and a container payload field are the same as content corresponding to descriptions in FIG. 11. Details are not described herein.

A second field indicates that the first data frame is a data frame for delivering a first container. Optionally, the second field further indicates that a transmission direction of the first data frame is from a CU to a DU or from a DU to a CU. Optionally, the second field further indicates that a protocol layer receiving the first data frame is an RLC layer or a MAC layer. With reference to the foregoing descriptions, types of the first container may be classified based on different cases of a first protocol layer and a second protocol layer. When the first protocol layer is an RLC layer and the second protocol layer is a PDCP layer, the first container may be referred to as a PDCP-RLC container; or when the first protocol layer is a MAC layer and the second protocol layer is a PDCP layer, the first container may be referred to as a PDCP-MAC container. It may be understood that the second field indicates that the first container included in the first data frame is the PDCP-RLC container or the PDCP-MAC container. Further, optionally, the second field may also be referred to as a PDU type (type) field.

For example, it is assumed that a first value set includes a seventh value and an eighth value, and a second value set includes a ninth value and a tenth value. When a value of the second field is a value in the first value set, it indicates that the transmission direction of the first data frame is from the CU to the DU, and the first data frame is a downlink data frame; or when a value of the second field is a value in the second value set, the transmission direction of the first data frame is from the DU to the CU, and the first data frame is an uplink data frame. When the value of the second field is the seventh value or the ninth value, the first container included in the first data frame is the PDCP-RLC container; or when the value of the second field is the eighth value or the tenth value, the first container included in the first data frame is the PDCP-MAC container.

As shown in FIG. 13, a length of the second field is four bits, a length of the spare field is four bits, a length of the container size field is one octet, and a length of the container payload field is at least one octet. It should be further noted that names and lengths of the fields included in the first data frame are not limited in embodiments of this application.

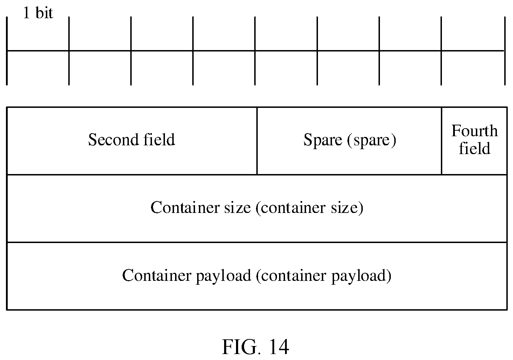

FIG. 14 shows a format of a first data frame according to an embodiment of this application. The first data frame includes the following fields.

A spare field, a container size field, and a container payload field are the same as content corresponding to descriptions in FIG. 11. Details are not described herein.

A second field indicates that the first data frame is a data frame for delivering a first container. Optionally, the second field further indicates that a protocol layer receiving the first data frame is an RLC layer or a MAC layer. With reference to the foregoing descriptions, types of the first container may be classified based on different cases of a first protocol layer and a second protocol layer. When the first protocol layer is an RLC layer and the second protocol layer is a PDCP layer, the first container may be referred to as a PDCP-RLC container; or when the first protocol layer is a MAC layer and the second protocol layer is a PDCP layer, the first container may be referred to as a PDCP-MAC container. It may be understood that the second field indicates that the first container included in the first data frame is the PDCP-RLC container or the PDCP-MAC container. Further, optionally, the second field may also be referred to as a PDU type (type) field.

A fourth field indicates that a transmission direction of the first data frame is from a CU to a DU or from a DU to a CU. For example, when a value of the fourth field is a fifth value, the transmission direction of the first data frame is from the CU to the DU, and the first data frame is a downlink data frame; or when a value of the fourth field is a sixth value, the transmission direction of the first data frame is from the DU to the CU, and the first data frame is an uplink data frame. Further, optionally, the fourth field may also be referred to as a direction (direction) field.

As shown in FIG. 14, a length of the second field is four bits, a length of the spare field is three bits, a length of the fourth field is one bit, a length of the container size field is one octet, and a length of the container payload field is at least one octet. It should be further noted that names and lengths of the fields included in the first data frame are not limited in embodiments of this application.

FIG. 11, FIG. 12, FIG. 13, and FIG. 14 are merely examples of formats of the first data frame provided in embodiments of this application. The first data frame may include a part of or all fields in the foregoing examples, or the first data frame may further include another field. This is not limited in embodiments of this application.

The first data frame newly defined for embodiments of this application is described above. The first data frame may alternatively be an existing data frame that is for delivering the first container. For example, the first data frame may be a user data (USER DATA) frame or an assistance information data (ASSISTANCE INFORMATION DATA) frame.

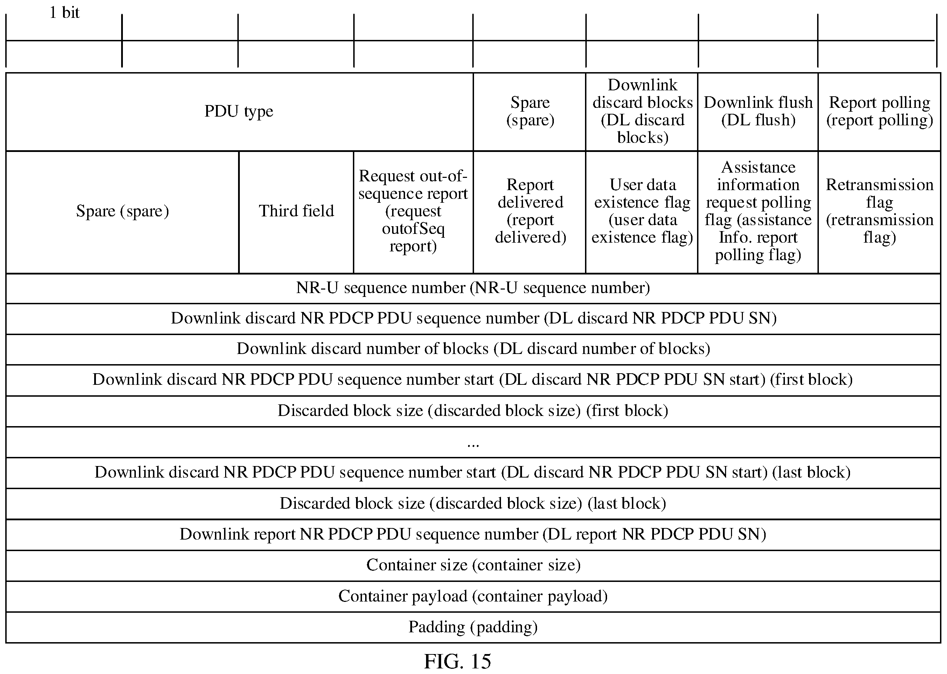

FIG. 15 shows a format of a first data frame according to an embodiment of this application. The first data frame is still in the format of the USER DATA frame. The first data frame includes a third field, a container size field, a container payload field, a PDU type field, a spare field, a downlink discard blocks (DL discard blocks) field, a downlink flush (DL flush) field, a report polling (report polling) field, a request out-of-sequence report (request outofSeq report) field, a report delivered (report delivered) field, a user data existence flag (user data existence flag) field, an assistance information request polling flag (assistance Info. report polling flag) field, a retransmission flag (retransmission flag) field, an NR-U sequence number (NR-U sequence number) field, a downlink discard NR PDCP PDU sequence number (DL discard NR PDCP PDU SN) field, a downlink discard number of blocks (DL discard number of blocks) field, a downlink discard NR PDCP PDU sequence number start (DL discard NR PDCP PDU SN start) field, a discarded block size (discarded block size) field, a downlink report NR PDCP PDU sequence number (DL report NR PDCP PDU SN) field, and a padding (padding) field.

Meanings of the DL discard blocks field, the DL flush field, the report polling field, the request outofSeq report field, the report delivered field, the user data existence flag field, the assistance Info. report polling flag field, the retransmission flag field, the NR-U sequence number field, the DL discard NR PDCP PDU SN field, the DL discard number of blocks field, the DL discard NR PDCP PDU SN start field, the DL discard NR PDCP PDU SN start field, the discarded block size field, and the DL report NR PDCP PDU SN field are the same as meanings of corresponding fields in an existing USER DATA frame format. For details, refer to descriptions in section 5.5.2.1 in the standard protocol 3GPP TS 38.425.

The third field, the container size field, and the container payload field are the same as content corresponding to descriptions in FIG. 11. Details are not described herein. The padding field is used to pad a size of the first data frame to (n×4-2) octets, where n is a positive integer.

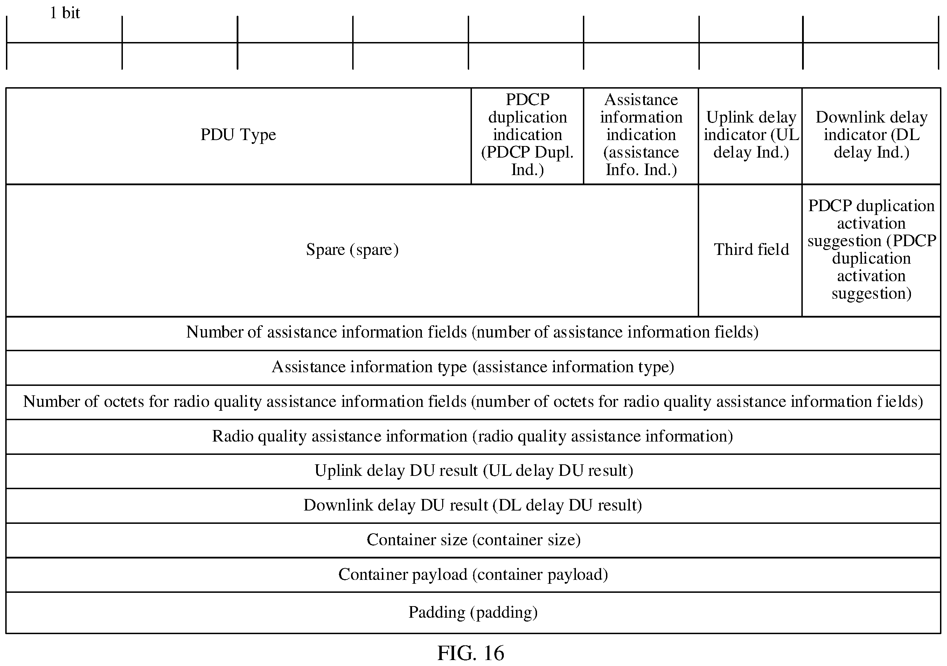

FIG. 16 shows a format of a first data frame according to an embodiment of this application. The first data frame is still in the format of the ASSISTANCE INFORMATION DATA frame. The first data frame includes a third field, a container size field, a container payload field, a PDU Type field, a spare field, a PDCP duplication indication (PDCP Dupl. Ind.) field, an assistance information indication (assistance Info. Ind.) field, an uplink delay indicator (UL delay Ind.) field, a downlink delay indicator (DL delay Ind.) field, a PDCP duplication activation suggestion (PDCP duplication activation suggestion) field, a number of assistance information fields (number of assistance information fields) field, an assistance information type (assistance information type) field, a number of octets for radio quality assistance information fields (number of octets for radio quality assistance information fields) field, a radio quality assistance information (radio quality assistance information) field, an uplink delay DU result (UL delay DU result) field, a downlink delay DU result (DL delay DU result) field, and a padding field.

The assistance Info. Ind. field, the UL delay Ind. field, the DL delay Ind. field, the PDCP duplication activation suggestion field, the number of assistance information fields field, the assistance information type field, the number of octets for radio quality assistance information fields field, the radio quality assistance information field, the UL delay DU result field, and the DL delay DU result field are the same as corresponding fields in an existing ASSISTANCE INFORMATION DATA frame format. For details, refer to descriptions in section 5.5.2.3 in the standard protocol 3GPP TS 38.425.

The third field, the container size field, and the container payload field are the same as content corresponding to descriptions in FIG. 11. Details are not described herein. The padding field is used to pad a size of the first data frame to (n×4-2) octets, where n is a positive integer.

To implement functions in the methods provided in embodiments of this application, both the terminal device and the network device may include a hardware structure and/or a software module, and implement the foregoing functions in a form of hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

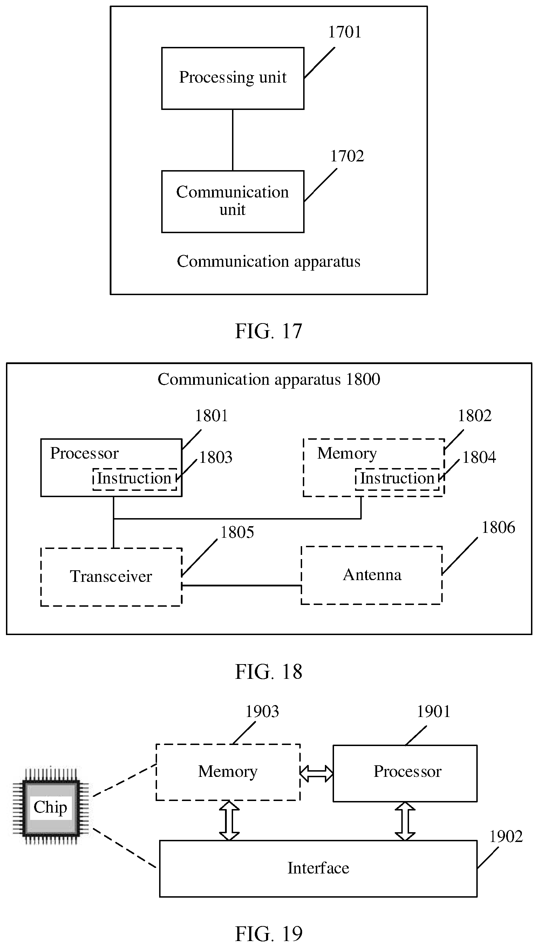

FIG. 17 is a diagram of a structure of a communication apparatus according to an embodiment of this application. The communication apparatus may be a terminal device or a network device, or an apparatus that can be used in combination with the terminal device or the network device. In a possible implementation, the communication apparatus may include modules or units that one-to-one correspond to the methods/operations/steps/actions performed by the transmitting end in the method embodiment shown in FIG. 4. The units may be implemented by a hardware circuit, software, or a combination of the hardware circuit and the software.

The communication apparatus shown in FIG. 17 may include a processing unit 1701 and a communication unit 1702. The processing unit 1701 is configured to perform data processing. A receiving unit and a sending unit are integrated into the communication unit 1702. The communication unit 1702 may also be referred to as a transceiver unit. Alternatively, the communication unit 1702 may be divided into the receiving unit and the sending unit.

The communication apparatus shown in FIG. 17 may be the terminal device, or the apparatus that can be used in combination with the terminal device. The communication apparatus may alternatively be a chip system.

When the communication apparatus is configured to perform a part of or all of the functions in the method embodiment described in FIG. 4, the communication unit 1702 is configured to receive , at a first protocol layer, a first container, where the first container includes first-type control information; the processing unit 1701 is configured to encapsulate the first container at the first protocol layer, to obtain a first control packet; and the communication unit 1702 is further configured to send the first control packet at the first protocol layer.

In a possible implementation, the first control packet includes indication information and the first container, and the indication information indicates that the first control packet is a control packet for delivering the first container.

In a possible implementation, a priority of sending the first control packet at the first protocol layer is higher than a priority of sending a data packet at the first protocol layer.

In a possible implementation, the communication unit 1702 is further configured to receive a first container at the first protocol layer, where the first container includes second-type control information; the processing unit 1701 is configured to encapsulate the first container at the first protocol layer, to obtain a first control packet of the first protocol layer; and the communication unit 1702 is further configured to send the first control packet at the first protocol layer.

In a possible implementation, the priority of sending the first control packet at the first protocol layer is higher than the priority of sending a data packet at the first protocol layer.

In a possible implementation, the processing unit 1701 is configured to generate the first container at a second protocol layer, where the first protocol layer is lower than the second protocol layer; and the communication unit 1702 is further configured to send the first container to the first protocol layer through the second protocol layer.

In a possible implementation, when the second protocol layer is a packet data convergence protocol PDCP layer, the first protocol layer is a radio link control RLC layer or a media access control MAC layer; or when the second protocol layer is an RLC layer, the first protocol layer is a MAC layer.

In a possible implementation, when the first protocol layer is a MAC layer, the first control packet further includes a first field, and the first field indicates that the first container included in the first control packet is from the second protocol layer.

In a possible implementation, the first protocol layer is located in a distributed unit DU, and the second protocol layer is located in a central unit CU; and sending the first container to the first protocol layer through the second protocol layer. The communication unit 1702 is specifically configured to send a first data frame to the DU through the CU, where the first data frame includes the first container.

In a possible implementation, the first data frame includes a second field and a third field, the second field indicates that the first data frame is a data frame for delivering the first container, the second field further indicates that a transmission direction of the first data frame is from the CU to the DU, and the third field indicates that a protocol layer receiving the first data frame is an RLC layer or a MAC layer.

In a possible implementation, the first data frame includes a second field, a third field, and a fourth field, the second field indicates that the first data frame is a data frame for delivering the first container, the third field indicates that a protocol layer receiving the first data frame is an RLC layer or a MAC layer, and the fourth field indicates that a transmission direction of the first data frame is from the CU to the DU.

In a possible implementation, the first data frame includes a second field and a fourth field, the second field indicates that the first data frame is a data frame for delivering the first container, the second field further indicates that a protocol layer receiving the first data frame is an RLC layer or a MAC layer, and the fourth field indicates that a transmission direction of the first data frame is from the CU to the DU.

In a possible implementation, the first data frame includes a second field, the second field indicates that the first data frame is a data frame for delivering the first container, the second field further indicates that a protocol layer receiving the first data frame is an RLC layer or a MAC layer, and the second field further indicates that a transmission direction of the first data frame is a CU-to-DU frame.

FIG. 18 is a diagram of a structure of another communication apparatus. The communication apparatus 1800 may be the transmitting end in the foregoing method embodiments, or may be a chip, a chip system, a processor, or the like that supports the transmitting end in implementing the foregoing method. The communication apparatus may be configured to implement the methods described in the foregoing method embodiments. For details, refer to the descriptions in the foregoing method embodiments.

Alternatively, the communication apparatus 1800 may be the receiving end in the foregoing method embodiments, or may be a chip, a chip system, a processor, or the like that supports the receiving end in implementing the foregoing method. The communication apparatus may be configured to implement the methods described in the foregoing method embodiments. For details, refer to the descriptions in the foregoing method embodiments.

The communication apparatus 1800 may include one or more processors 1801. The processor 1801 may be a general-purpose processor, a dedicated processor, or the like. For example, the processor 1801 may be a baseband processor or a central processing unit. The baseband processor may be configured to process a communication protocol and communication data. The central processing unit may be configured to: control the communication apparatus (for example, a base station, a baseband chip, a terminal, a terminal chip, a DU, or a CU), execute a software program, and process data of the software program.

Optionally, the communication apparatus 1800 may include one or more memories 1802. The memory may store instructions 1804, and the instructions may be run on the processor 1801, so that the communication apparatus 1800 performs the methods described in the foregoing method embodiments. Optionally, the memory 1802 may further store data. The processor 1801 and the memory 1802 may be disposed separately, or may be integrated together.

Optionally, the communication apparatus 1800 may further include a transceiver 1805 and an antenna 1806. The transceiver 1805 may be referred to as a transceiver unit, a transceiver machine, a transceiver circuit, or the like, and is configured to implement a transceiver function. The transceiver 1805 may include a receiver and a transmitter. The receiver may be referred to as a receiving machine, a receiver circuit, or the like, and is configured to implement a receiving function. The transmitter may be referred to as a transmitting machine, a transmitter circuit, or the like, and is configured to implement a sending function.

The communication apparatus 1800 is the transmitting end: The processor 1801 is configured to perform a data processing operation of the transmitting end in the foregoing method embodiments. The transceiver 1805 is configured to perform a data sending and receiving operation of the transmitting end in the foregoing method embodiments.

Alternatively, the communication apparatus 1800 is a receiving end: The processor 1801 is configured to perform a data processing operation of the receiving end in the foregoing method embodiments. The transceiver 1805 is configured to perform a data sending and receiving operation of the receiving end in the foregoing method embodiments.

In another possible design, the processor 1801 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, optionally, the processor 1801 may store instructions 1803. When the instructions 1803 are run on the processor 1801, the communication apparatus 1800 may be caused to perform the method described in the foregoing method embodiments. The instructions 1803 may be fixed in the processor 1801. In this case, the processor 1801 may be implemented by hardware.

In still another possible design, the communication apparatus 1800 may include a circuit. The circuit may implement a sending, receiving, or communication function in the foregoing method embodiments. The processor and the transceiver described in embodiments of this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like.

The communication apparatus described in the foregoing embodiments may be the transmitting end or the receiving end. However, a scope of the communication apparatus described in embodiments of this application is not limited thereto, and a structure of the communication apparatus may not be limited to FIG. 18. The communication apparatus may be an independent device or may be a part of a large device. For example, the communication apparatus may be:
(1) an independent integrated circuit IC, a chip, or a chip system or subsystem;
(2) a set that has one or more ICs, where optionally, the IC set may also include a storage component configured to store data and instructions;
(3) an ASIC, such as a modem (mobile station modem, MSM);
(4) a module that can be embedded in another device;
(5) a receiver, a terminal, an intelligent terminal, a cellular phone, a wireless device, a handheld device, a mobile unit, a vehicle-mounted device, a cloud device, an artificial intelligence device, or the like; or
(6) another.

For a case in which the communication apparatus is a chip or a chip system, refer to a diagram of a structure of a chip shown in FIG. 19. The chip shown in FIG. 19 includes a processor 1901 and an interface 1902. Optionally, the chip may further include a memory 1903. There may be one or more processors 1901, and there may be a plurality of interfaces 1902.

In a design, for a case in which the chip is configured to implement a function of a transmitting end in embodiments of this application:
the interface 1902 is configured to input or output a signal; and
the processor 1901 is configured to perform a data processing operation of the transmitting end in the foregoing method embodiments.

In another design, for a case in which the chip is configured to implement a function of a receiving end in embodiments of this application:
the interface 1902 is configured to input or output a signal; and
the processor 1901 is configured to perform a data processing operation of the receiving end in the foregoing method embodiments.

It may be understood that, in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with another feature based on a requirement. Correspondingly, the communication apparatus provided in embodiments of this application may also correspondingly implement these features or functions. Details are not described herein.

It should be noted that the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The processor may be a general-purpose processor, a digital signal processor (digital signal processor, DSP), an ASIC, a field programmable gate array (field programmable gate array, FPGA) or another programmable logic device, a discrete gate or a transistor logic device, or a discrete hardware component.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

This application further provides a computer-readable medium, configured to store computer software instructions. When the instructions are executed by a communication apparatus, the function in any one of the foregoing method embodiments is implemented.

This application further provides a computer program product, configured to store computer software instructions. When the instructions are executed by a communication apparatus, the function in any one of the foregoing method embodiments is implemented.

All or a part of the functions in the foregoing embodiments may be implemented by using software, hardware, firmware, or any combination thereof. When the software is used to implement the functions, all or a part of the functions may be implemented in a form of a computer program product. The computer program product includes one or more computer instructions. When the computer instructions are loaded and executed on a computer, the procedures or functions based on embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state drive, SSD)), or the like.

In the foregoing embodiments, the descriptions of each embodiment have respective focuses. For a part that is not described in detail in an embodiment, refer to related descriptions in other embodiments.

## Claims

1. A control information transmission method, wherein the method is applied to a user plane of a transmitting end, and the method comprises:
receiving a first container at a first protocol layer, wherein the first container comprises first-type control information;
encapsulating the first container at the first protocol layer to obtain a first control packet of the first protocol layer; and
sending the first control packet at the first protocol layer.

2. The method according to claim 1, wherein the first control packet comprises indication information and the first container, and the indication information indicates that the first control packet is a control packet for delivering the first container.

3. The method according to claim 1 or 2, wherein the method further comprises:
receiving the first container at the first protocol layer, wherein the first container comprises second-type control information;
encapsulating the first container at the first protocol layer to obtain a second control packet of the first protocol layer; and
sending the second control packet at the first protocol layer.

4. The method according to any one of claims 1 to 3, wherein a priority of sending the first control packet at the first protocol layer is higher than a priority of sending a data packet at the first protocol layer.

5. The method according to any one of claims 1 to 4, wherein the method further comprises:
generating the first container at a second protocol layer, wherein the first protocol layer is lower than the second protocol layer; and
sending the first container to the first protocol layer through the second protocol layer.

6. The method according to claim 5, wherein
when the second protocol layer is a packet data convergence protocol PDCP layer, the first protocol layer is a radio link control RLC layer or a media access control MAC layer; or
when the second protocol layer is an RLC layer, the first protocol layer is a MAC layer.

7. The method according to claim 6, wherein when the first protocol layer is a MAC layer, the first control packet further comprises a first field, and the first field indicates that the first container contained in the first control packet is from the second protocol layer.

8. The method according to claim 6 or 7, wherein the first protocol layer is located in a distributed unit DU, and the second protocol layer is located in a central unit CU; and
the sending the first container to the first protocol layer through the second protocol layer comprises:
sending a first data frame to the DU through the CU, wherein the first data frame comprises the first container.

9. The method according to claim 8, wherein the first data frame further comprises a second field, and the second field indicates that the first data frame is a data frame for delivering the first container.

10. The method according to claim 9, wherein the first data frame further comprises a third field, and the third field indicates that a protocol layer receiving the first data frame is an RLC layer or a MAC layer.

11. The method according to claim 10, wherein the second field further indicates that a transmission direction of the first data frame is from the CU to the DU.

12. The method according to claim 10, wherein the first data frame further comprises a fourth field, and the fourth field indicates that a transmission direction of the first data frame is from the CU to the DU.

13. The method according to claim 9, wherein the second field further indicates that a protocol layer receiving the first data frame is an RLC layer or a MAC layer.

14. The method according to claim 13, wherein the first data frame further comprises a fourth field, and the fourth field indicates that a transmission direction of the first data frame is from the CU to the DU.

15. The method according to claim 13, wherein the second field further indicates that a transmission direction of the first data frame is from the CU to the DU.

16. The method according to any one of claims 8 to 15, wherein the first data frame is an assistance information data frame or a user data frame.

17. A communication apparatus, wherein the communication apparatus comprises a module or a unit configured to perform the method according to any one of claims 1 to 16.

18. A communication apparatus, comprising a processor coupled to a memory, wherein the processor is configured to execute a computer program or instructions stored in the memory, to implement the method according to any one of claims 1 to 16.

19. The apparatus according to claim 18, wherein the apparatus further comprises the memory and/or a transceiver, and the transceiver is configured to send and receive data and/or signaling.

20. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor performs the method according to any one of claims 1 to 16 through a logic circuit or by executing instructions.

21. A computer-readable storage medium, wherein the storage medium stores a computer program or instructions, and when the computer program or the instructions are executed by a communication apparatus, the method according to any one of claims 1 to 16 is performed.
